# EUROPEAN PATENT SPECIFICATION

(11) **EP 1 497 965 B1**
(45) Date of publication and mention of the grant of the patent: **20.08.2014**
(21) Application number: 03719459.4
(22) Date of filing: 19.03.2003
(51) Int. Cl.: H04L 29/06

(54) **METHOD AND APPARATUS FOR IDENTIFYING TRANSPORT STREAMS AS NETWORKS**
VERFAHREN UND VORRICHTUNG ZUM IDENTIFIZIEREN VON TRANSPORTSTRÖMEN ALS NETZWERKE
PROCEDE ET APPAREIL D'IDENTIFICATION DE TRAINS DE TRANSPORT EN RESEAUX

(30) Priority: 23.04.2002 US 375171 P; 12.07.2002 US 194188
(43) Date of publication of application: 19.01.2005
(73) Proprietor: GENERAL INSTRUMENT CORPORATION, Horsham, PA 19044 (US)
(72) Inventor: MACK, Robert, Edward, Collegeville, PA 19426 (US); JOST, Art, Mt. Laurel, NJ 08054 (US)
(74) Representative: Boult Wade Tennant
(86) International application number: PCT/US2003/009069
(87) International publication number: WO 2003/092244

(56) References cited:
- WO-A-01/15455
- INTERNATIONAL DATACASTING: "Superflex MX2001 series IP/DVB encapsulator" INTERNATIONAL DATACASTING, [Online] March 2002 (2002-03), XP002248103 Retrieved from the Internet: <URL:www.google.fr> [retrieved on 2003-07-17]
- ATSC STANDARD: "ATSC Standard: Delivery of IP Multicast Sessions over ATSC Data Broadcast" ADVANCED TELEVISION SYSTEMS COMMITTEE, [Online] 31 January 2002 (2002-01-31), XP002248104 Retrieved from the Internet: <URL:www.google.fr> [retrieved on 2003-07-17]
- HANSEN, NORDBOTTEN: "Demonstrator Platform for broadband cellular radio access at 40Ghz" CRABS, [Online] 16 - 16 March 1999, XP002248105 Lillehammer, Norway Retrieved from the Internet: <URL:www.google.fr> [retrieved on 2003-07-17]
- FAIRHURST, CLAUSEN, COLLINI-HOCKER, LINDER: "Requirements for transmission of IP datagrams over DVB networks" IETF DRAFT, [Online] January 2002 (2002-01), XP002248106 Retrieved from the Internet: <URL:www.google.fr> [retrieved on 2003-07-17]
- CHU, GARREC, MACK, MEANDZIJA: "Proposal for automatic extractions of the IP services carried in DVB streams" MOTOROLA WHITE PAPER, [Online] 7 September 2001 (2001-09-07), XP002248107 Retrieved from the Internet: <URL:www.google.fr> [retrieved on 2003-07-17]
- MOGUL, POSTEL: "RFC 950: Internet standard subnetting procedure" IETF RFC, August 1985 (1985-08), XP002248108

## Description

### Field of the Invention

This invention relates generally to the field of routing digital information. More specifically, this invention relates to routing network data for use in a cable distribution system.

### Background of the Invention

In the past, networking systems have distributed packets of information among various network devices by identifying each physical device with a device address and including the destination device address in each packet of information. For example, in a computer network an individual computer is assigned an address on the network that allows it to be designated as the receiver of a packet of information sent by another network device.

In a typical internet system, a first computer, such as a server computer, is capable of transmitting packets of information to a second computer, such as a client computer, across the internet by providing a source address and a destination address as part of each individual packet of information. Thus, each packet of information from the server is routed through the network to the destination address which coincides with the client computer's address on the network. Furthermore, data packets sent by the client computer to the server computer are transmitted in the same fashion.

In addition to client computers, other network devices such as routers are given network addresses so that they may be designated as well. These devices facilitate the transmission of individual data packets throughout the inter/intra-network so that the data packets can be transported from the source address to the destination address. Thus, by identifying physical devices with an address, data can be routed to a particular physical device.

In the cable industry, various services, e.g., channels of program material, are transmitted via transport streams from a cable headend to a subscriber's set top box. Multiple individual services or channels can be combined in a transport stream which is transmitted to the subscriber's set top box across the cable medium. These transport streams can be transmitted via optical fibers leased by the cable network or via other alternative media.

The cable headend is responsible for receiving content from content providers and distributing it to subscribers. Typically, a cable headend receives content destined for a particular output service. Routing of the content to a particular output service requires an operator to make a determination as to which service the received content should be routed. Thus, for a sizable cable system, the process of routing the content material to the appropriate service can be quite daunting.

While a cable headend can receive content from a variety of sources, it is becoming increasingly popular to receive content via the internet at the cable headends. Thus, as is the case with content received from other sources, this content received via the internet will be designated as being for a particular service of a particular transport stream or a component PID stream that is not part of an MPEG service. Again, this can be a time consuming operation requiring an operator to route the content received via the internet to the appropriate transport stream/service number or non-service related MPEG PID stream.

International Datacasting 'Superflex MX2001 series IP/DVB encapsulator' describes a DVB/IP encapsulator that completes the routing information with the MPEG-2 transport stream packet identifier and receiver', Ethernet MAC address information.

Fairhurst, Clausen, Collini-Hocker, Linder 'Requirements for transmission of IP datagrams over DVB networks', IETF Draft, January 2002 describes a framework for transport of IP Datagrams over ISO MPEG-2 Transport Streams.

It would be desirable if there were a mechanism that could efficiently route content received via a network, such as the internet, to a desired output PID stream or MPEG service, which is part of a given transport stream.

### Summary

In accordance with an aspect of the present invention there is provided method and a router for routing a received data packet according to the accompanying claims.

One embodiment of the present invention provides a method for routing content received from a network to a desired transport stream/service number (or component PID stream).

Further embodiments of the invention will be apparent to those of ordinary skill in the art from a consideration of the following description taken in conjunction with the accompanying drawings, wherein certain methods, apparatuses, and articles of manufacture for practicing the embodiments of the invention are illustrated. However, it is to be understood that the invention is not limited to the details disclosed.

### Brief Description of the Drawings

Fig. 1 illustrates an embodiment of the invention showing a router for routing network data to a corresponding transport stream number/service number or component PID stream.
Fig. 2 illustrates a typical computing device which can be used for sending, routing, and receiving data at the source, router, and destination devices.
Fig. 3 illustrates one embodiment of a system for providing program content and distributing program content to a content receiver, such as a set top box in a subscriber's home.
Fig. 4 is a flow chart illustrating a method of routing data according to one embodiment of the invention.
Fig. 5 is a flow chart illustrating a method of forwarding data to a transport stream from a network source according to one embodiment of the invention.
Fig. 6 is a flow chart illustrating a method of routing a data packet to a transport stream according to one embodiment of the invention.
Fig. 7 is a flow chart illustrating a method of routing a data packet to a PID stream of a transport stream according to one embodiment of the invention.
Fig. 8 is a flow chart illustrating a method of routing an IP datagram to an MPEG PID stream according to one embodiment of the invention.
Fig. 9 is a flow chart illustrating a method of mapping an IP datagram to an MPEG PID stream based upon an IP destination address according to one embodiment of the invention.
Fig. 10 is a flow chart illustrating a method of routing a data packet according to one embodiment of the invention.

### Description

By receiving a data packet comprising a network destination address, identifying the transport stream by the network destination address, and forwarding the data packet for use in the transport stream based upon the network destination address.

Another embodiment provides a method for distributing data which comprises receiving a data packet comprising a network address, providing a transport stream, and determining that the data packet should be routed to the transport stream based upon the network address of the data packet.

In one embodiment, a method of routing data is provided by providing an IP datagram stream having an IP destination address, providing a transport stream which comprises an MPEG PID stream, designating the MPEG PID stream with the IP network address, and routing the IP datagram stream to the MPEG PID stream based on the IP network address.

According to one embodiment of the invention a system is provided which allows a mapping of a first network datastream to a second network datastream. For example, an IP datastream can be mapped to a PID datastream that is for use in an MPEG system. To accomplish this, a router can be provided to receive the incoming IP datastream and to route it to the appropriate PID stream.

For example, each PID stream is given an IP address as well as a network mask. The network mask of each PID stream is then logically ANDed with the destination address of a packet arriving at the router as part of the incoming IP datastream. The result of this logical ANDing is then compared to the network address of the PID stream associated with the network mask to see if a match exists. Thus, this embodiment of the invention allows a PID stream, for example, to be designated by a standard IP address and data to be routed to the PID stream.

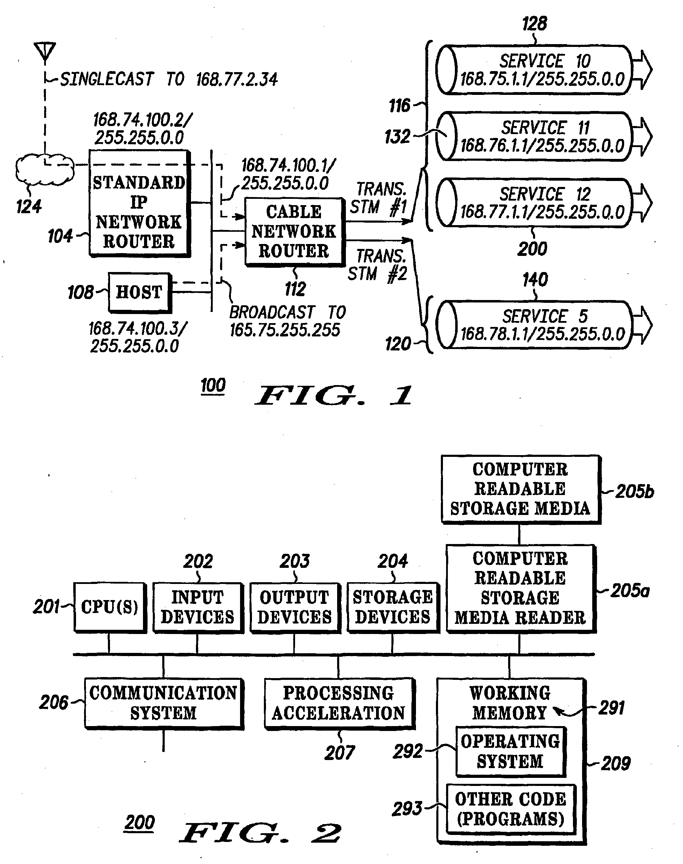

Fig. 1 illustrates one embodiment of the invention. In the example illustrated in Fig. 1, a network 124 provides a datastream, e.g., an IP singlecast datastream which is routed through a network router at IP address 168.74.100.2. In Fig. 1, this singlecast IP datastream is transmitted via network router 104 to router 112 which resides at address 168.74.100.1. The router 112 compares the destination address received as part of the datagram with the network masks of individual PID streams by logically ANDing the destination address with each network mask. For example, the destination address of the incoming datagram 168.77.2.34 can be logically ANDed with the network masks for services 10, 11, 12 and 5 shown in Fig. 1. Namely, it can be logically ANDed with the network mask value of 255.255.0.0 for service number 10. If that logical ANDing results in a value of 168.75.0.0 it would correspond with the network address shown for service 10. Similarly, the destination address of the incoming packet could be compared to the network mask for service 11 which is shown as 255.255.0.0. In that case, for example, the logical ANDing would need to result in a value of 168.76.0.0. for service 11 to be selected as the routing destination. However, in this case, the logically ANDing of the destination address 168.77.2.34 with the network mask for service 12, which is 255.255.0.0, results in a value of 168.77.0.0 which corresponds to the network address for service 12 (also designated as PID stream 200 in Fig. 1). Thus, by utilizing the network mask for each outgoing PID stream and ANDing each to the destination address of the incoming datagram the appropriate outgoing PID stream can be selected for routing purposes.

A routing table can be utilized for the router to accomplish this. Once the router has determined the appropriate service number, the router can route the datagram to the appropriate port as part of transport stream no. 1 in Fig. 1. Fig. 1 also shows the individual PID streams for each transport stream shown. Namely, PID stream 128 is shown as service 10 having a network address of 168.75.1.1 with a network mask value of 255.255.0.0. Similarly, service 11 is designated as PID stream 132. It has a network address of 168.76.1.1 and a network mask value of 255.255.0.0. In addition, service 12 is designated as PID.stream 136 having a network address of 168.77.1.1 and a network mask of 255.255.0.0. Furthermore, for transport stream 2, service 5 is designated as PID stream 140 having a network address of 168.78.1.1 and a network mask value of 255.255.0.0. Fig. 1 illustrates that services 10, 11, and 12 are part of transport stream 1, while service no. 5 is part of transport stream 2. Transport stream 1 is designated 116 in system 100 shown in Fig. 1. Transport stream 2 is designated as 120 in Fig. 1.

In addition to receiving singlecast IP datagrams, the router 112 can also receive broadcast IP datagrams from a host computer. For example, Fig. 1 illustrates that host 108 can transmit a directed broadcast datastream to router 112. Again, the individual data packets can be provided with a destination address which is used by the router in comparison with the network masks for each PID stream so as to determine the appropriate PID stream to which the datastream should be routed.

Fig. 2 illustrates a standard block diagram for computing devices which can be used as part of the system shown in Fig. 1. For example, the individual computing devices connected to network 124 as well as host 108, network router 104, router 112 and user devices which are not shown in Fig. 1, such as content receivers (e.g., set-top boxes), can be configured according to the block diagram shown in Fig. 2. Fig. 2 broadly illustrates how individual system 100 elements can be implemented in a separated or more integrated manner within various, generally similarly configured processing systems. System 200 is shown comprised of hardware elements that can be electrically coupled via bus 208, including a processor 201, input device 202, output device 203, storage device 204, computer-readable storage media reader 205a, communications system 206 processing acceleration (e.g., DSP or special-purpose processors) 207 and memory 209. Computer-readable storage media reader 205a is further connected to computer-readable storage media 205b, the combination comprehensively representing remote, local, fixed and/or removable storage devices plus storage media, memory, etc. for temporarily and/or more permanently containing computer-readable information, which can include storage device 204, memory 209 and/or any other such accessible system 200 resource. System 200 also comprises software elements (shown as being currently located within working memory 291) including an operating system 292 and other code 293, such as programs, applets, data and the like.

System 200 provides extensive flexibility and configurability consistent with that already enabled by the system 100 of FIG. 1. Thus, for example, a single architecture might be utilized to implement one or more servers that can be further configured in accordance with currently desirable protocols, protocol variations, extensions, etc. However, it will be apparent to those skilled in the art that substantial variations may well be utilized in accordance with more specific application requirements. Customized hardware might also be utilized and/or particular elements might be implemented in hardware, software (including so-called "portable software," such as applets) or both. Further, while connection to other computing devices such as network input/output devices (not shown) may be employed, it is to be understood that wired, wireless, modem and/or other connection or connections to other computing devices might also be utilized. Distributed processing, multiple site viewing, information forwarding, collaboration, remote information retrieval and merging, and related capabilities are each contemplated. Operating system utilization will also vary depending on the particular host devices and/or process types (e.g. computer, appliance, portable device, etc.) and certainly not all system 200 components will be required in all cases.

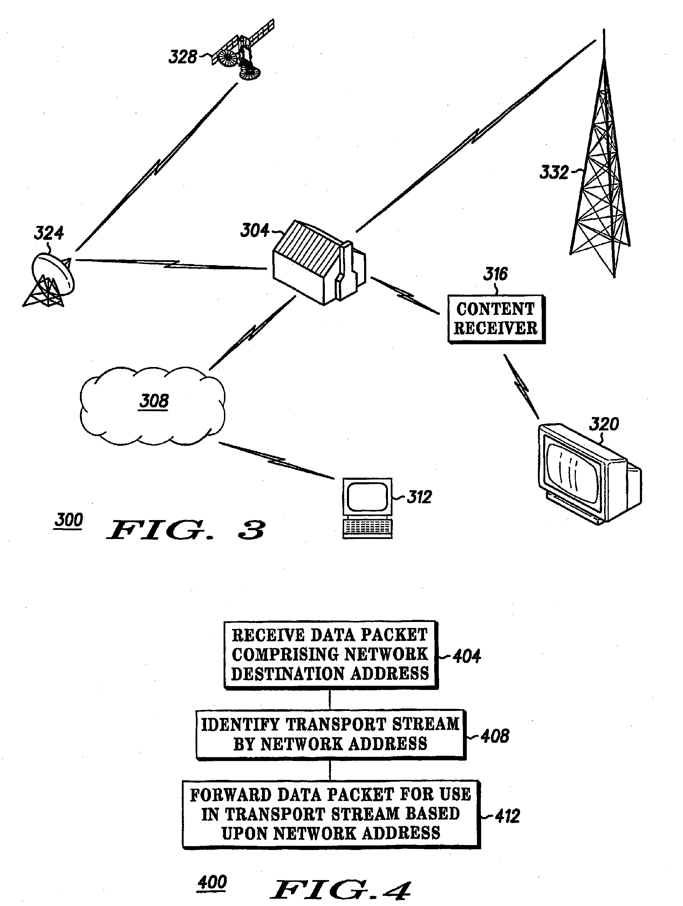

In a broadband system, content can be provided to an end user subscriber from a variety of sources. Furthermore, the content can be received at a cable headend and distributed via the cable plant via a variety of transmission media, for example, via fiber optic or wire transmission media to the end user. Fig. 3 illustrates a typical system 300 in which the cable headend 304 receives content from a variety of sources. Namely, Fig. 3 shows a transmission tower 332 which can transmit content via RF transmission to the headend, a satellite system with a satellite 328 and satellite receiver 324 which communicates additional content to the cable headend, as well as a content providing computer 312 which transmits content via network 308, such as the internet, to the cable headend. The headend can then utilize its various transmission media to distribute the content to a content receiver 316, such as a set top box, for presentation to the end user, such as via television receiver 320 or the like. A standard IP protocol can be utilized to distribute the data via network 308 to the cable headend 304. A variety of networking formats could be utilized to accomplish this, and the invention should not be limited merely to IPv4. For example, format IPv6 might also be implemented as the networking protocol under the network layer of the OSI reference model, according to at least one embodiment of the invention.

Fig. 4 illustrates a method of implementing one embodiment of the invention. In flow chart 400 of Fig. 4, Block 404 shows that a data packet is received which comprises a network destination address. Block 408 shows that a transport stream can be identified by the network address, i.e., the address that identifies the network and consequently is associated with a PID stream. Block 412 shows that the data packet can be forwarded for use in the transport stream based upon the network address.

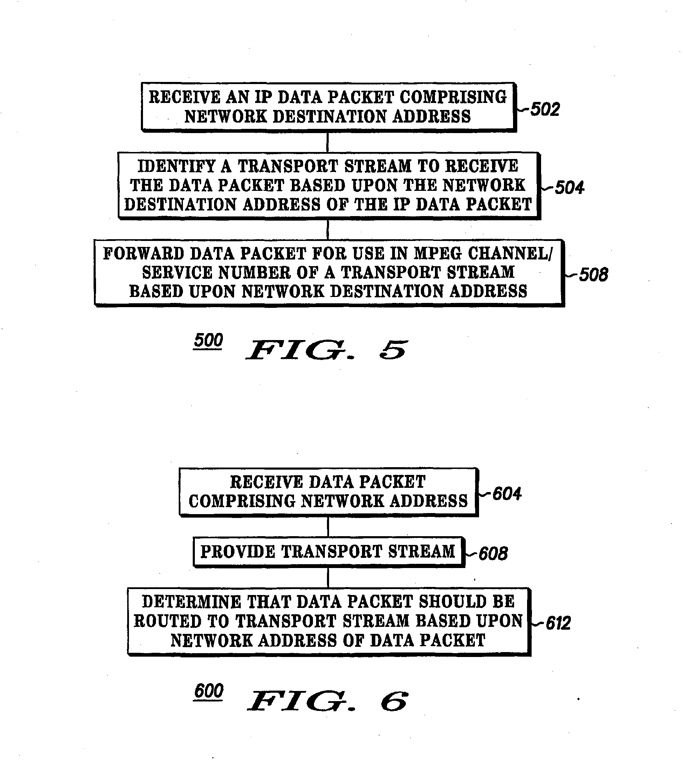

Similarly, flow chart 500 of Fig. 5 illustrates another embodiment of the invention. In Fig. 5, block 502 shows that an IP data packet is received which comprises a network destination address. Block 504 shows that a transport stream can be identified to receive the data packet based upon network destination address of the IP data packet. In this example, the data packet that is received is a data packet corresponding to the IP protocol. Block 508 shows that the data packet can be forwarded for use in an MPEG channel/service number of a transport stream based upon the network destination address of the IP data packet.

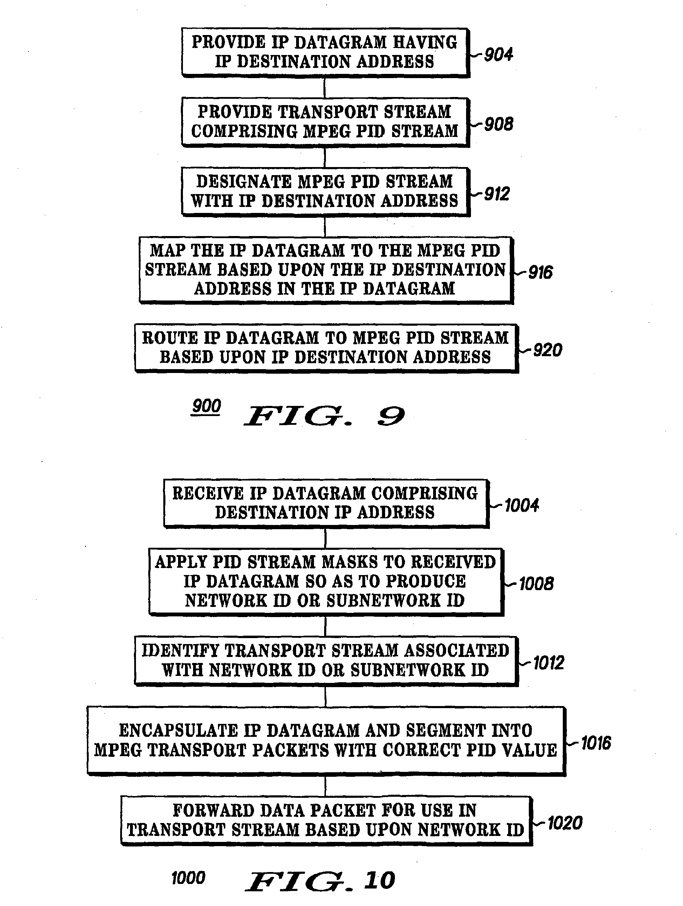

Fig. 10 illustrates another embodiment of the invention in accordance with the principles of Figs. 4 and 5. In method 1000 of Fig. 10, an IP datagram is received at a router. The IP datagram includes a destination IP address for the datagram as shown in block 1004. In block 1008, a PID stream mask(s) is applied to the received IP datagram destination address so as to produce a network ID or subnetwork ID. (To produce a subnetwork ID, a subnetwork mask would be applied to the datagram's destination address.) In block 1012, a transport stream is identified that is associated with the previously determined network ID or subnetwork ID for the datagram. The IP datagram is encapsulated and segmented into MPEG transport packets with the correct PID value, as shown by block 1016. Finally, in block 1020, the data packet is forwarded for use in a transport stream based upon the network ID.

Fig. 6 illustrates another embodiment of the invention via flow chart 600. In block 604 of Fig. 6, a data packet is received which comprises a network address. A transport stream is provided as illustrated in block 608 and a determination is made in block 612 that the data packet should be routed to the transport stream based upon the network address of the data packet.

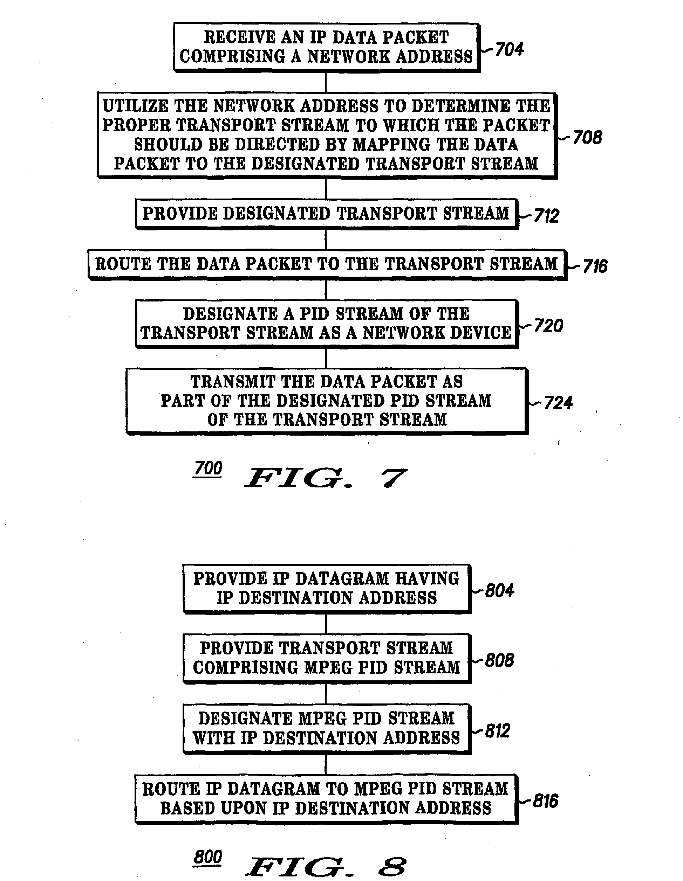

Fig. 7 illustrates a more detailed example according to one embodiment of the invention. In flow chart 700 of Fig. 7, block 704 shows that an IP data packet is received comprising a network address. Also, network mask information is known for each individual PID stream which is part of a transport stream. Block 708 shows that a router, for example, can utilize the network address received as part of the IP data packet to determine the proper transport stream to which the packet should be directed by mapping the data packet to the designated transport stream. Block 712 shows that the designated transport stream is provided. In block 716 the data packet is routed to the designated transport stream. In block 720, a PID stream of a transport stream is designated as a network device. In block 724 the data packet is transferred as part of the designated PID stream of the transport stream.

In Fig. 8, method 800 illustrates another embodiment of the invention. In block 804 of Fig. 8, an IP datagram is provided having an IP destination address. A transport stream is provided in block 808 which comprises an MPEG PID stream. In block 812, the MPEG PID stream is designated with an IP destination address. In block 816, the IP datagram is routed to the MPEG PID stream based upon the IP destination address.

Fig. 9 illustrates another embodiment of the invention according to flow chart 900. In block 904 an IP datagram is provided having an IP destination address. Block 908 shows that a transport stream is also provided comprising at least one MPEG PID stream. Block 912 shows that the MPEG PID stream is designated the same as the IP destination address. In this example, this designation would occur prior to the IP datagram being received. Block 916 shows that the IP datagram is mapped to the MPEG PID stream based upon the IP destination address included as part of the IP datagram. Block 920 shows that the IP datagram is routed to the MPEG PID stream based upon the IP destination address.

The operation of the router can be accomplished via a routing table which compares the IP destination address included as part of the IP datagram to the IP addresses given to each MPEG PID stream. Therefore, when an IP datagram is received at a router and includes an IP destination address, that IP destination address can be logically ANDed with the network mask of each MPEG PID stream so as to determine whether the resulting value of the logical ANDing operation results in the corresponding network address for that MPEG PID stream. For example, if the destination address of the MPEG PID stream is 168.77.2.34, a logical ANDing of that value with the network mask (255.255.0.0) for transport stream 1, service 12 shown in Fig. 1 would result in a value of 168.77.0.0. As can be seen, this value of 168.77.0.0 corresponds in its first two numbers, i.e., the network address of service 12 which has an actual address of 168.77.1.1. Therefore, the router can consider this to be a match and route the IP datagram to service 12 as part of transport stream 1. A routing table can be used that comprises a network ID, a subnetwork mask, and a next hop for each PID stream. A router computes a network ID for a PID stream based on the PID's IP address and subnetwork mask. This network ID, subnetwork mask and PID ID are then filled-in to the routing table. The routing table would thus need merely the individual IP addresses associated with each MPEG PID stream and transport stream as well as the network mask for each PID stream in a transport stream. Then the routing table could be used to compare the destination address of each incoming packet to the network mask of each individual PID stream in the table to determine whether a resulting match occurs. If a resulting match occurs, then the data packet can be routed to each matching PID stream.

For those comparisons that do not result in a match, a default value can be utilized to direct the data packet which does not match a particular PID stream to a default stream. Thus, the router can direct all non-matching packets to a default PID stream to act as a default gateway.

Furthermore, the routing table could be configured so as to not forward non-matching packets.

It should be noted that while the examples given have mainly referred to routers other devices that forward data are intended as well.

While various embodiments of the invention have been described as methods or apparatus for implementing the invention, it should be understood that the invention can be implemented through code coupled to a computer, e.g., code resident on a computer or accessible by the computer. For example, software and databases could be utilized to implement many of the methods discussed above. Thus, in addition to embodiments where the invention is accomplished by hardware, it is also noted that these embodiments can be accomplished through the use of an article of manufacture comprised of a computer usable medium having a computer readable program code embodied therein, which causes the enablement of the functions disclosed in this description. Therefore, it is desired that embodiments of the invention also be considered protected by this patent in their program code means as well.

It is also envisioned that embodiments of the invention could be accomplished as computer signals embodied in a carrier wave, as well as signals (e.g., electrical and optical) propagated through a transmission medium. Thus, the various information discussed above could be formatted in a structure, such as a data structure, and transmitted as an electrical or optical signal through a transmission medium or stored on a computer readable medium.

It is also noted that many of the structures, materials, and acts recited herein can be recited as means for performing a function of steps for performing a function. Therefore, it should be understood that such language is entitled to cover all such structures, materials, or acts disclosed within this specification and their equivalents.

It is thought that the apparatuses and methods of the embodiments of the present invention and many of its attendant advantages will be understood from this specification and it will be apparent that various changes may be made in the form, construction, and arrangements of the parts thereof, the form herein before described being merely exemplary embodiments thereof.

## Claims

1. A method of distributing data, comprising:
providing each one or more outgoing MPEG packet identity data streams hereafter referred to as outgoing PID streams with a network mask and a network address,
receiving a data packet comprising a destination address, and routing said data packet to the outgoing PID stream whose network address matches the logical ANDing of its network mask and of said destination address of said received data packet.

2. A method according to claim 1, wherein the received data packet is an IP data packet.

3. A method according to claim 1 or 2, wherein the received data packet is configured according to version 4 of the internet layer protocol.

4. A method according to claim 1 or 2, wherein the received data packet is configured according to version 6 of the internet layer protocol.

5. A method according to any preceding claim, further comprising:
filtering a first network address to derive the network address.

6. A method according to any preceding claim, wherein the received designation address is an IP designation address.

7. A router comprising means adapted to carry out the method steps according to claim 1.

## Patentansprüche

1. Verfahren zur Verteilung von Daten, das Folgendes aufweist:
Versehen eines jeden oder mehrerer ausgehender MPEG-Paket-Identitätsdatenströme, nachstehend als ausgehende PID-Ströme bezeichnet, mit einer Netzmaske und einer Netzadresse,
Empfangen eines Datenpakets mit einer Zieladresse, und Leiten des Datenpakets an den ausgehenden PID-Strom, dessen Netzadresse dem logischen UNDieren seiner Netzmaske und der Zieladresse des empfangenen Datenpakets entspricht.

2. Verfahren nach Anspruch 1, wobei das empfangene Datenpaket ein IP-Datenpaket ist.

3. Verfahren nach Anspruch 1 oder 2, wobei das empfangene Datenpaket gemäß Version 4 des Internetschichtprotokolls ausgelegt ist.

4. Verfahren nach Anspruch 1 oder 2, wobei das empfangene Datenpaket gemäß Version 6 des Internetschichtprotokolls ausgelegt ist.

5. Verfahren nach einem der vorhergehenden Ansprüche, das des Weiteren Folgendes aufweist:
Filtern einer ersten Netzadresse, um die Netzadresse abzuleiten.

6. Verfahren nach einem der vorhergehenden Ansprüche, wobei die empfangene Zieladresse eine IP-Zieladresse ist.

7. Router mit einem Mittel, das dazu angepasst ist, die Verfahrensschritte gemäß Anspruch 1 auszuführen.

## Revendications

1. Procédé de distribution de données, comprenant :
réaliser chacun d'un ou de plusieurs flux de données d'identité de paquets MPEG sortants référencés ci-après en tant que flux PID sortants avec un masque de réseau et une adresse de réseau,
recevoir un paquet de données comprenant une adresse de destination, et router ledit paquet de données au flux PID sortant dont l'adresse de réseau correspond à la fonction ET logique de son masque de réseau et de ladite adresse de destination dudit paquet de données reçu.

2. Procédé selon la revendication 1, dans lequel le paquet de données reçu est un paquet de données IP.

3. Procédé selon la revendication 1 ou 2, dans lequel le paquet de données reçu est configuré en accord avec la version 4 du protocole de couche Internet.

4. Procédé selon la revendication 1 ou 2, dans lequel le paquet de données reçu est configuré en accord avec la version 6 du protocole de couche Internet.

5. Procédé selon l'une quelconque des revendications précédentes, comprenant en outre :
filtrer une première adresse de réseau afin de dériver l'adresse de réseau.

6. Procédé selon l'une quelconque des revendications précédentes, dans lequel l'adresse de désignation reçue est une adresse de désignation IP.

7. Routeur comprenant des moyens aptes à exécuter les étapes de procédé selon la revendication 1.
